# EUROPEAN PATENT APPLICATION

(11) **EP 1 923 163 A2**
(43) Date of publication of application: **21.05.2008**
(21) Application number: 07120770.8
(22) Date of filing: 15.11.2007
(51) Int. Cl.: B23K 9/235, B23K 9/23, B23K 9/32, H05B 3/00

(54) **Lamp-based SWET welding apparatus**

(30) Priority: 17.11.2006 US 561036
(71) Applicant: General Electric Company, Schenectady, NY 12345 (US)
(72) Inventor: Garza, Jose A., McAllen, TX 78504 (US); Goodacre, Barrie L., McAllen, TX 78504 (US); Amador, Renaul, Weslaco, TX 78596 (US)
(74) Representative: Illingworth-Law, William Illingworth

(57) **Abstract**

A welding apparatus (20) for welding a workpiece (22) includes a welding-containment box (24) of sufficient size to contain the workpiece (22) at a welding position (26), and a welder disposed within the welding-containment box (24) to he operable on the workpiece (22) at the welding position (26). A heating apparatus (50) includes four heaters (52) disposed within the welding-containment box (24). Each heater (52) has a lamp (54) aimed at the welding position (26), and a heater support (80) upon which the lamp (54) is mounted. The heater support (80) includes a slide (82) that controllably moves the lamp (54) toward and away from the welding position (26). Each lamp (54) preferably includes a light source (56) having a light output (58), and a reflector (60) having a reflecting surface disposed to reflect an incident portion of the light output (58) of the light source (56) toward the welding position (26). The reflector (60) preferably has an aluminum-alloy substrate (64), and a chromium reflecting surface contacting the substrate (64) and disposed to reflect an incident portion of the light output (58) of the light source (56) toward the welding position (26).

## Description

This invention relates to a welding apparatus and, more particularly, to a welding apparatus that uses high-intensity lamps to heat the workpiece that is to be welded.

### BACKGROUND OF THE INVENTION

The welding of certain compositions and workpiece-shapes of nickel-base and cobalt-base superalloys is difficult due to embrittlement and cracking of the material during the welding process. Such welding may typically include joining two workpieces, the repair of a single workpiece, or the application of a surface layer to a workpiece. A technique called Superalloy Welding at Elevated Temperature (SWET) has been developed to accomplish the welding of these compositions and workpieces. Briefly, the workpiece is preheated prior to welding, and the welding is performed at the elevated temperature. There may be a post-welding heat treatment as well. Some of the materials and workpieces requiring SWET welding, and the process itself, are described, for example, in U.S. Patents 5,897,801 and 6,124,568, whose disclosures are incorporated by reference.

Various types of apparatus have been developed to perform the SWET welding. In one approach, the workpiece or workpieces to be welded are heated by a heat lamp. The high intensity quartz halogen lamp is aimed at the workpiece, and the power to the lamp is adjusted to control the output to achieve a pre-selected heating, holding, or cooling profile. The operator of the welding apparatus performs the welding at the appropriate time in the thermal cycle.

While existing apparatus and procedures are operable in many cases, there is still opportunity for improvement. The present approach provides such an improvement.

### SUMMARY OF THE INVENTION

The present invention provides an improved welding apparatus for accomplishing SWET welding of nickel-base and cobalt-base superalloys, and for similar applications. The apparatus accomplishes precisely controlled heating of the superalloy workpiece being welded, with the lamp heaters being readily positioned to accommodate the heating requirements.

In accordance with the invention, a welding apparatus for welding a workpiece comprises a welding-containment box, preferably a glove box, of sufficient size to contain the workpiece at a welding position, and optionally a welder disposed within the welding-containment box to be operable on the workpiece at the welding position. There is typically an atmospheric control operable to introduce an inert atmosphere into the welding-containment box. A heating apparatus comprises at least three, and preferably four, heaters disposed within the welding-containment box. In the preferred form wherein there are four heaters, the four heaters lie in a plane and are disposed at 90 degrees from each other. Each heater comprises a lamp aimed at the welding position, and a heater support upon which the lamp is mounted. The lamp desirably has a short focal length, on the order of about 1-5 inches, and most preferably about 2 inches. The heater support comprises a slide that controllably moves the lamp toward and away from the welding position.

Preferably, each lamp comprises a light source having a light output, and a reflector having a reflecting surface disposed to reflect an incident portion of the light output of the light source toward the welding position. Desirably, the reflector includes a substrate, which is not chromium, and is preferably an aluminum alloy. The reflecting surface is a chromium layer overlying, and preferably contacting, the substrate and disposed to reflect an incident portion of the light output of the light source toward the welding position.

In one construction, the welding-containment box comprises a base and a removable lid. There is additionally a heating-apparatus support hingedly mounted to the base. The heating-apparatus is affixed to the heating-apparatus support, so that it may be swung out of the way to permit easy access to the welding position.

In service, a workpiece is enclosed within the welding-containment box. The workpiece is made of a nickel-base superalloy or a cobalt-base superalloy.

Thus, in one form, a welding apparatus for welding a workpiece comprises a welding-containment box of sufficient size to contain the workpiece at a welding position, and a welder disposed within the welding-containment box to be operable on the workpiece at the welding position. A heating apparatus is disposed within the welding-containment box. The heating apparatus comprises a lamp aimed at the welding position. Each lamp comprises a light source having a light output, and a reflector comprising a substrate, which is not chromium, and a chromium-reflecting surface contacting the substrate and disposed to reflect an incident portion of the light output of the light source toward the welding position. The lamp is mounted to a heater support. Other compatible features discussed herein may be used with this embodiment.

The present welding apparatus is effective in accomplishing SWET and related types of welding of difficult-to-weld alloys. The heating of the workpiece is performed in a precise manner using heating lamps that are heat resistant and rugged. The chromium reflective surface resists the scratching that is otherwise a serious problem with softer reflective surfaces, such as aluminum reflective surfaces. The chromium also does not oxidize at the service temperature of the reflector.

The placement of the lamp heaters within the welding-containment box allows them to be positioned close to the workpiece, allowing a maximum intensity of energy to be directed against the workpiece. The multiple lamp heaters allow the workpiece to be heated on all sides, and the individual slide mountings move the lamp heaters to a precisely positioning.

Other features and advantages of the present invention will be apparent from the following more detailed description of the preferred embodiment, taken in conjunction with the accompanying drawings, which illustrate, by way of example, the principles of the invention. The scope of the invention is not, however, limited to this preferred embodiment.

### BRIEF DESCRIPTION OF THE DRAWINGS

Figure 1 is an exterior perspective view of a welding apparatus, showing some internal features in phantom;
Figure 2 is a sectional view of the welding apparatus of Figure 1, taken on line 2-2;
Figure 3 is a sectional view of the welding apparatus of Figure 1, taken on line 3-3;
Figure 4 is a perspective view of the interior of the welding apparatus, with the lid removed and with the hinged heating-apparatus support swung up for access to the welding position; and
Figure 5 is a sectional view of one of the lamps, taken on line 5-5 of Figure 2.

### DETAILED DESCRIPTION OF THE INVENTION

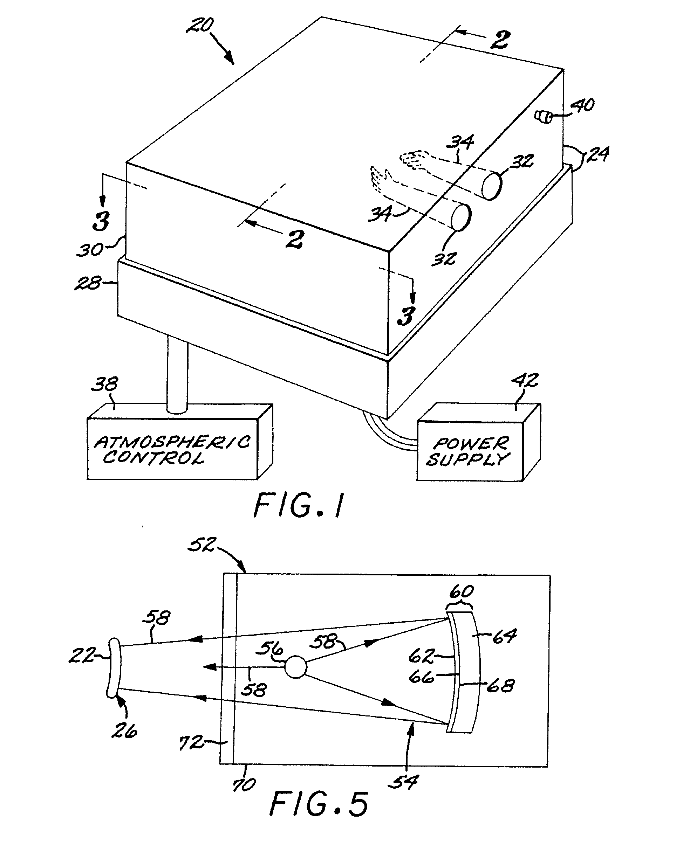

Figures 1-4 illustrate various views of a welding apparatus 20 for welding a workpiece 22. A preferred workpiece 22 is made of a nickel-base superalloy or a cobalt-base superalloy of the type that is susceptible to cracking during welding unless welded by the SWET technique. An example of a preferred workpiece 22 is a component of a gas turbine engine such as a low-pressure turbine blade, a turbine nozzle, or the like.

The welding apparatus 20 includes a welding-containment box 24 of sufficient size to contain the workpiece 22 at a welding position 26. The welding-containment box 24 preferably includes a base 28 and a removable lid 30. The base 28, the lid 30, and interior components of the welding apparatus 20 are water cooled as necessary. A peripheral seal 31 prevents gas leakage in the space between the base 28 and the lid 30, when the lid is installed to the base 28. The preferred welding-containment box 24 is a glove box. In a preferred form of the glove box, glove ports 32 have gloves 34 sealed thereto and extending into an interior 36 of the welding-containment box 24. When welding is to be performed, an operator inserts his hands through the glove ports 32 and into the gloves 34 in order to work within the interior 36 of the welding-containment box 24.

The welding apparatus 20 further includes an atmospheric control

38 in gaseous communication with the interior 36 of the welding-containment box 24. The atmospheric control 38 controllably produces a selected atmosphere within the interior 36 of the welding-containment box 24. The atmosphere is typically selected to be an inert atmosphere, such as an inert gas, to prevent oxidation of the workpiece 22 at elevated temperature. The atmospheric control 38 may include a vacuum pump to produce a reduced air pressure within the interior of the welding-containment box 24 (with plates covering the glove ports 32), and a source of an inert gas such as argon that is backfilled into the interior 36 of the welding-containment box 24. If desired, a continuous flow of the inert gas may be maintained from the atmospheric control 38, through the interior 36 of the welding-containment box 24, and out through a release valve 40.

The welding apparatus 20 also includes a power supply 42 that supplies power to a welder and to heaters that are described subsequently, as well as to any other electrically powered components located within the welding-containment box 24. (In Figures 1-5, the full electrical interconnections are not shown to avoid clutter.)

Optionally, a well 44 is formed in the base 28 to allow the workpiece 22 to be positioned at an appropriate work height relative to the base 28. There may also be a turntable 46 to permit the workpiece 22 to be controllably turned so as to be properly positioned relative to the glove ports 32. The turntable 46 may instead be a jack to controllably change the height of the workpiece 22, or the functions of the turntable and jack may be combined into a single structure.

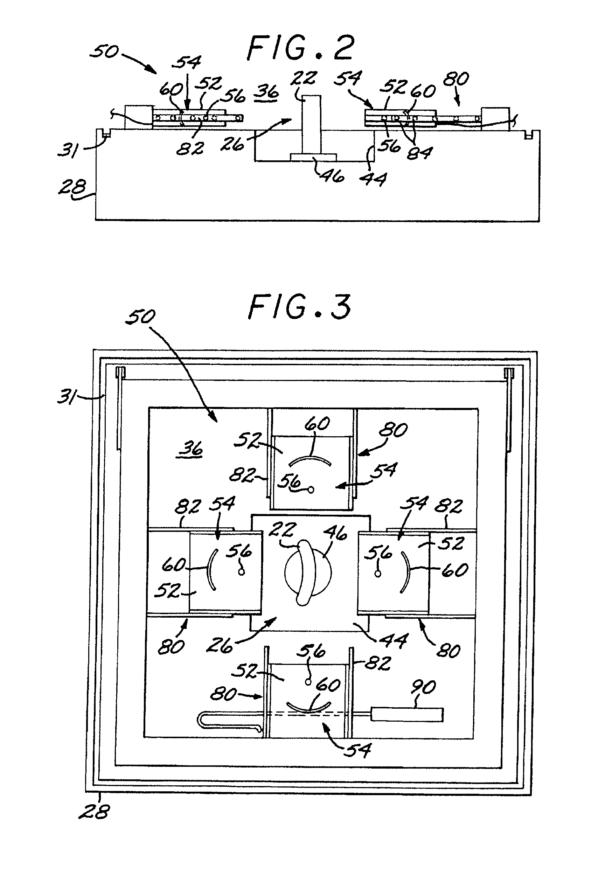

The welding apparatus 20 further includes a heating apparatus 50 comprising at least three, and preferably four, heaters 52 disposed within the interior 36 of the welding-containment box 24, see Figures 2-4. The heaters 52 are within the interior 36 of the welding-containment box 24. The heaters 52 are not outside the welding-containment box 24 and directed through windows in the glove-containment box 24. Placement of the heater 52 within the interior 36 of the welding-containment box 24 allows them to be placed more closely to the workpiece 22, and does not result in the energy loss associated with the passage of light energy through windows in the welding-containment box 24.

Each heater 52 includes a lamp 54 aimed at the welding position 26. Figures 2-3 depict the lamps of the preferred four-heater configuration, and Figure 5 depicts one of the lamps 54 in greater detail. The lamps 54 are preferably quartz-halogen lamps. Each lamp 54 has a light source 56 having a light output 58. Each lamp 54 also includes a reflector 60 having a reflecting surface 62 disposed to reflect an incident portion of the light output 58 of the light source 56 toward the welding position 26. The reflector 60 is preferably formed as a substrate 64, which is not chromium. The reflector 60 is preferably an aluminum-base alloy. An overlayer 66 overlies and contacts a surface 68 of the substrate 64. The overlayer 66 is chromium, which may be electrodeposited upon the surface 68 of the substrate 64. The chromium overlayer 66 is sufficiently hard that it does not scratch easily in production operations. The chromium layer 66 does not oxidize to an extent that its reflectance is reduced as a result of heating during service. The chromium overlayer 66 forms the reflecting surface 62. The chromium overlayer 66 may be of any operable thickness.

The substrate surface 68 is curved to a mirror shape required to reflect an incident portion of the light output 58 of the light source 56 toward the welding position 26. The lamp geometry and mirror shape are preferably selected to have a focal distance of from 1 to 5, and preferably 2, inches, with the result that the lamp 56 must be positioned close to the welding position 26 to function optimally. The thin chromium overlayer 66 conforms to the shape of the substrate surface 68, so that the shape of the reflecting surface 62 on the chromium overlayer 66 has the required shape to reflect an incident portion of the light output 58 of the light source 56 toward the welding position 26. The reflecting surface 62, which actually reflects the incident portion of the light output 58, is on the chromium overlayer 66. That is, no other layer overlies the chromium overlayer 66 so that the reflecting surface is on that other layer. The reflecting surface 62 is on the chromium overlayer 66.

The lamp 54 is enclosed in a heater housing 70. An optional window 72 in the heater housing 70, such as a quartz window, allows the light output 58, both directly from the light source 56 and reflected from the reflector 60, to pass through the heater housing 70 to the welding position 26 and any workpiece 22 at the welding position 26.

Each heater 52 further includes a heater support 80 upon which the heater 52 is mounted. In the illustrated embodiment, there are four heaters 52, and four heater supports 80. Each heater support 80 comprises a slide 82 that controllably moves the heater 52 and its lamp 54 toward and away from the welding position. The heater 52 and its lamp 54 are mounted to the slide 82 by a set of bearings 84, typically a set of roller bearings. The slide 82 is preferably a full-extension slide having the structure and function of a full-extension drawer slide. The slide 82 permits the heater 52 and its lamp 54 to be positioned closely to the welding position 26 and to the workpiece 22 located at the welding position 26, but to be moved back and out of the way to allow access to the welding position 26 and to the workpiece 22 for installation, welding procedures, and removal performed on the workpiece 22. Figures 2 and 3 illustrate the heaters 52 in various degrees of extension.

Also as seen in Figures 2 and 3, the heating apparatus 50 preferably comprises four heaters 52 lying in a plane (the plane of the top of the base 28) and disposed at 90 degrees from each other. As shown in Figure 3, when the workpiece 22 is irregularly shaped, the independently movable heaters 52 may be positioned for optimal heating of all of the sides of the workpiece 22. For example, optimal heating may require that the heaters 52 are at the same distance from the facing surfaces of the workpiece 22.

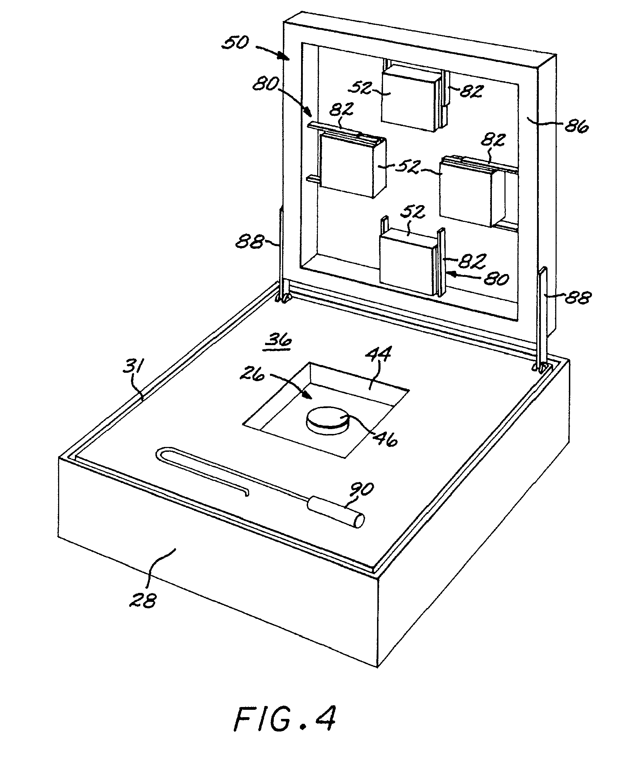

For operational convenience, all of the slides 82 and their supported heaters 52 are preferably mounted to a frame 86. The frame 86 in turn is mounted to the base 28 with counterweighted, hinged heating-apparatus supports 88. The hinged heating-apparatus supports 88 allow the frame 86, and thence the slides 82 and the heaters 52, to be pivoted between a lowered position, seen in Figures 2-3, for welding operation, and a raised position, seen in Figure 4, that is out of the way. The raised position of Figure 4 allows access to the welding position 26 for loading, welding, and removal of the workpiece 22, while the lowered position of Figures 2-3 is used for pre-welding heat treatment and post-welding heat treatment.

The welding apparatus 20 also usually includes a welder 90 disposed within the welding-containment box 24. The welder 90 may he of any operable type for either non-consumable or consumable welding. The welder 90 is positioned to be operable on the workpiece 22 at the welding position 26. For manual welding with the glove-box form of the welding-containment box 24, the welder 90 is grasped and operated by the hands of the welder within the gloves 34 by reaching through the glove ports 32. The welder 90 may also be an automated welding device operated robotically within the welding-containment box 24.

The present approach has been reduced to practice in the form depicted in Figures 1-5.

Although a particular embodiment of the invention has been described in detail for purposes of illustration, various modifications and enhancements may be made without departing from the spirit and scope of the invention. Accordingly, the invention is not to be limited except as by the appended claims.

## Claims

1. A welding apparatus (20) for welding a workpiece (22), the welding apparatus (20) comprising:
a welding-containment box (24) of sufficient size to contain the workpiece (22) at a welding position (26);
a heating apparatus (50) comprising at least three heaters (52) disposed within the welding-containment box (24), wherein each heater (52) comprises
a lamp (54) aimed at the welding position (26), and
a heater support (80) upon which the lamp (54) is mounted, wherein the heater support (80) comprises a slide (82) that controllably moves the lamp (54) toward and away from the welding position (26).

2. The welding apparatus (20) of claim 1, wherein the welding-containment box (24) is a glove box.

3. The welding apparatus (20) of claim 1 or claim 2, further including
an atmospheric control (38) operable to introduce an inert atmosphere into the welding-containment box (24).

4. The welding apparatus (20) of any one of the preceding claims, wherein the heating apparatus (50) comprises exactly four heaters (52) lying in a plane and disposed at 90 degrees from each other.

5. The welding apparatus (20) of any one of the preceding claims, wherein each lamp (54) comprises
a light source (56) having a light output (58), and
a reflector (60) having a reflecting surface (62) disposed to reflect an incident portion of the light output (58) of the light source (56) toward the welding position (26).

6. The welding apparatus (20) of any one of the preceding claims, wherein each lamp (54) comprises
a light source (56) having a light output (58) (58), and
a reflector (60) comprising
a substrate (64) which is not chromium, and
a chromium reflecting surface (62) contacting the substrate (64) and disposed to reflect an incident portion of the light output (58) of the light source (56) toward the welding position (26).

7. The welding apparatus (20) of any one of the preceding claims, wherein each lamp (54) comprises
a light source (56) having a light output (58), and
a reflector (60) comprising
an aluminum-alloy substrate (64), and
a chromium reflecting surface contacting the substrate (64) and disposed to reflect an incident portion of the light output (58) of the light source (56) toward the welding position (26).

8. The welding apparatus (20) of any one of the preceding claims, further including a workpiece (22) enclosed within the welding-containment box (24), wherein the workpiece (22) is made of a nickel-base superalloy or a cobalt-base superalloy.

9. The welding apparatus (20) of any one of the preceding claims, wherein
the welding-containment box (24) comprises a base (28) and a removable lid, and further including
a heating-apparatus support (88) hingedly mounted to the base (28), wherein the heating apparatus (50) is affixed to the heating-apparatus support (88).

10. The welding apparatus (20) of any one of the preceding claims, further including
a welder (90) disposed within the welding-containment box (24) to be operable on the workpiece (22) at the welding position (26).
